# EUROPEAN PATENT APPLICATION

(11) **EP 2 733 172 A1**
(43) Date of publication of application: **21.05.2014**
(21) Application number: 12814714.7
(22) Date of filing: 29.06.2012
(51) Int. Cl.: C08L 21/00, B60C 1/00, C08F 210/10, C08F 216/12, C08L 9/06, C08L 29/10

(54) **RUBBER COMPOSITION, CROSSLINKED RUBBER COMPOSITION, PNEUMATIC TIRE, AND METHOD FOR PRODUCING ISOBUTYLENE POLYMER**

(30) Priority: 15.07.2011 JP 2011157115
(71) Applicant: JX Nippon Oil & Energy Corporation, Chiyoda-ku Tokyo 100-8162 (JP)
(72) Inventor: JIN Zhengzhe, Tokyo 100-8162 (JP); TAKASHIMA Tsutomu, Tokyo 100-8162 (JP); YAMAGUCHI Tsuyoshi, Tokyo 100-8162 (JP); CHIBA Tatsuya, Tokyo 100-8162 (JP)
(74) Representative: Grünecker, Kinkeldey, Stockmair & Schwanhäusser
(86) International application number: PCT/JP2012/066768
(87) International publication number: WO 2013/011820

(57) **Abstract**

A rubber composition containing a rubber component having an olefinic double bond, and an isobutylene polymer having a structural unit represented by the following formula (1) and a structural unit represented by the following formula (2), wherein the content of a low molecular weight substance whose molecular weight is 1000 or less in the isobutylene polymer is 5% by mass or less based on the total amount of the isobutylene polymer. 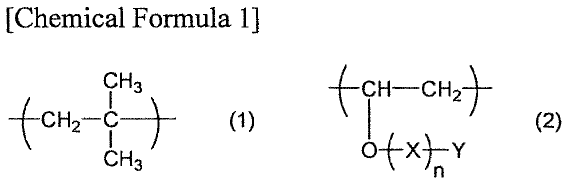 [wherein X represents a divalent group, Y represents a substituted or unsubstituted alicyclic group having an unsaturated bond, and n represents 0 or 1.]

## Description

### Technical Field

The present invention relates to a rubber composition containing an isobutylene polymer, a crosslinked rubber composition prepared by crosslinking the rubber composition, a pneumatic tire containing the crosslinked rubber composition, and a method for producing an isobutylene polymer.

### Background Art

Conventionally, as rubber materials for tires, various ones have been known. For example, as a rubber material for use in a tread part of a tire, a rubber composition including a diene raw material rubber, a reinforcing agent, and a specified acid anhydride-modified polybutene in specified proportions is disclosed in Patent Literature 1.

A tread rubber composition for studless tires, prepared by compounding carbon black and/or silica and a polyisobutylene compound having at least one alkoxysilyl group to a rubber such as a natural rubber in specified proportions, is disclosed in Patent Literature 2.

A rubber composition including a polymer having an alkoxysilane and at least one hydrogen-bondable moiety selected from the group consisting of a carboxylic acid, an amide, an ester, a hydroxyl group and an amino group in the molecule thereof, and having at least one isobutylene as a monomer is disclosed in Patent Literature 3.

A rubber composition including a polymer having in the molecule thereof at least one free radical selected from the group consisting of a nitroxide radical, a hydrazyl radical, an allyloxy radical and a trityl radical which are stably present at ordinary temperature and in the presence of oxygen, and including an isobutylene repeating unit is disclosed in Patent Literature 4.

A rubber composition including a block copolymer of a homopolymer or copolymer of a diene compound and polybutene is disclosed in Patent Literature 5.

A rubber composition including a block copolymer of polybutene and polybutadiene is disclosed in Patent Literature 6.

A rubber composition for tire treads, obtained by preliminarily kneading a brominated polyisobutylene/p-methylstyrene copolymer with an oxide of a divalent metal atom and a nitrogen atom-containing organic compound, and then kneading the resulting preliminarily kneaded product with other rubber component, is disclosed in Patent Literature 7.

A rubber composition containing a polymer obtained by cationic copolymerization using a Lewis acid catalyst as an initiator, and a rubber component is disclosed in Patent Literature 8, and it is described therein that an isobutylene homopolymer or a copolymer of isobutylene and an aromatic vinyl compound is preferable as the polymer.

A rubber composition including a rubber elastomer, a triblock elastomer and a reinforcing agent in specified proportions is disclosed in Patent Literature 9. It is also described therein that at least one triblock elastomer that is configured by a terminal polystyrene hard segment A and an internal isobutene elastomer/soft segment B and that has a general arrangement of A-B-A is used as the triblock elastomer.

A vulcanizable rubber composition prepared by adding a mercaptopolybutenyl derivative having a specified structure or an acylthio-polybutenyl derivative having a specified structure to a sulfur-curable rubber is disclosed in Patent Literature 10.

A functional polyisobutylene having a disulfide bond in at least a part of polymer molecular chains of polyisobutylene is described in Patent Literature 11.

### Citation List

### Patent Literature

[Patent Literature 1] Japanese Patent Application Laid-Open No. 11-35735
[Patent Literature 2] Japanese Patent Application Laid-Open No. 11-91310
[Patent Literature 3] Japanese Patent Application Laid-Open No. 2000-169523
[Patent Literature 4] Japanese Patent Application Laid-Open No. 2000-143732
[Patent Literature 5] Japanese Patent Application Laid-Open No. 11-80364
[Patent Literature 6] Japanese Patent Application Laid-Open No. 2001-131289
[Patent Literature 7] Japanese Patent Application Laid-Open No. 11-80433
[Patent Literature 8] Japanese Patent Application Laid-Open No. 11-315171
[Patent Literature 9] Japanese Patent Application Laid-Open No. 2001-247722
[Patent Literature 10] Japanese Patent Application Laid-Open No. 10-251221
[Patent Literature 11] Japanese Patent Application Laid-Open No. 2005-54016

### Summary of Invention

### Technical Problem

An object of the present invention is to provide a crosslinked rubber composition useful as a rubber material for tires, and a rubber composition for obtaining the crosslinked rubber composition. In addition, an object of the present invention is to provide a pneumatic tire provided with a part including the crosslinked rubber composition. Furthermore, an object of the present invention is to provide a method for producing an isobutylene polymer to be suitably used in the rubber composition.

### Solution to Problem

The rubber composition of the present invention contains a rubber component having an olefinic double bond, and an isobutylene polymer having a structural unit represented by the following formula (1) and a structural unit represented by the following formula (2). In the rubber composition of the present invention, the content of a low molecular weight substance whose molecular weight is 1000 or less in the isobutylene polymer is 5% by mass or less based on the total amount of the isobutylene polymer: 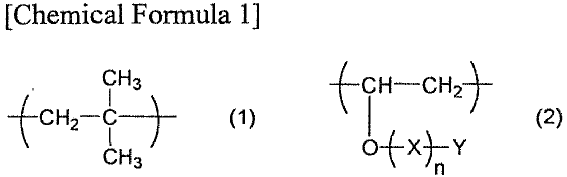 wherein, X represents a divalent group, Y represents a substituted or unsubstituted alicyclic group having an unsaturated bond, and n represents 0 or 1.

According to such a rubber composition, a crosslinked rubber composition having a structure in which the rubber component and the isobutylene polymer are crosslinked is obtained. Since the crosslinked rubber composition is obtained by using the above specified isobutylene polymer, the loss coefficient (tanδ) at a high temperature (for example 60°C) is small and the loss coefficient (tanδ) at a low temperature (for example 0°C) is large in a dynamic viscoelastic test. Furthermore, this crosslinked rubber composition is excellent in abrasion resistance. Therefore, the crosslinked rubber composition obtained from the rubber composition according to the present invention can exhibit excellent rolling resistance characteristic, braking property (wet-gripping property) and abrasion resistance in the case of being used for, for example, a tread part of a pneumatic tire.

In addition, the crosslinked rubber composition is also favorable in water vapor barrier property and oxygen barrier property. Therefore, the crosslinked rubber composition obtained from the rubber composition according to the present invention can also be suitably used for, for example, an inner liner part of a pneumatic tire.

Hereinafter, a characteristic of having a small loss coefficient (tanδ) at a high temperature (for example 60°C) and a large loss coefficient (tanδ) at a low temperature (for example 0°C) in a dynamic viscoelastic test refers to as "being excellent in dynamic viscoelastic characteristic". In addition, "being more excellent in dynamic viscoelastic characteristic" means that the loss coefficient at a high temperature is smaller and/or the loss coefficient at a low temperature is larger.

In the present invention, the isobutylene polymer may also have a structural unit represented by the following formula (3) and/or a structural unit represented by the following formula (4) as the structural unit represented by the above formula (2): 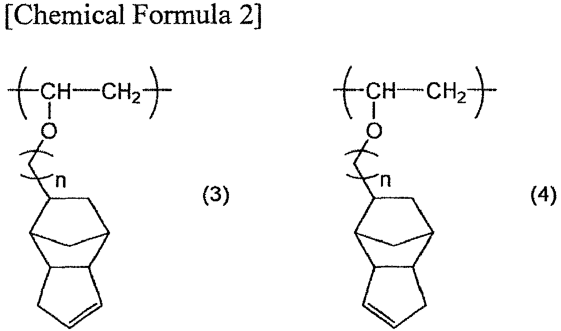 wherein, n represents 0 or 1.]

An isobutylene polymer having the structural unit represented by the formula (3) and/or the structural unit represented by the formula (4) is excellent in crosslinkability to the rubber component. In addition, according to the isobutylene polymer, a crosslinked rubber composition more excellent in dynamic viscoelastic characteristic and abrasion resistance is obtained.

The isobutylene polymer may also have a structural unit represented by the following formula (5) and/or a structural unit represented by the following formula (6) as the structural unit represented by the above formula (2): 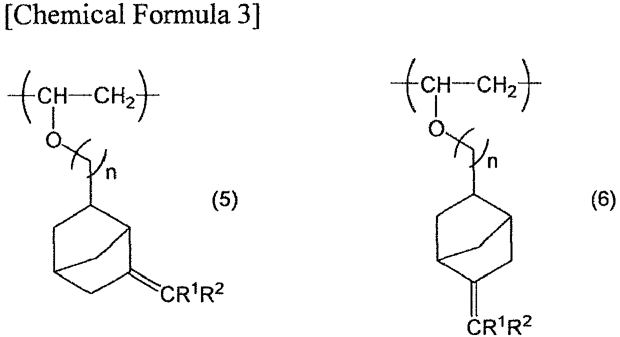 wherein, n represents 0 or 1, R¹ and R² each independently represents a hydrogen atom, an alkyl group or a phenyl group, and R¹ and R² may be bonded with each other to form a ring.

An isobutylene polymer having the structural unit represented by the formula (5) and/or the structural unit represented by the formula (6) is excellent in crosslinkability to the rubber component. In addition, according to the isobutylene polymer, a crosslinked rubber composition more excellent in dynamic viscoelastic characteristic and abrasion resistance is obtained.

In the present invention, the isobutylene polymer may also be a polymer obtained by copolymerizing isobutylene and a vinyl ether compound represented by the following formula (7):

CH₂=CH-O-(X)ₙ-Y (7)

wherein, X represents a divalent group, Y represents a substituted or unsubstituted alicyclic group having an unsaturated bond, and n represents 0 or 1,
in a reaction liquid to which a Lewis acid catalyst, a protic complexing agent and an aprotic complexing agent are added.

Then, in the above copolymerization, when the total molar number of the Lewis acid catalyst, the total molar number of the protic complexing agent and the total molar number of the aprotic complexing agent, added to the reaction liquid, are defined as A, B₁ and B₂, respectively, and the total molar number of the vinyl ether compound subjected to the copolymerization is defined as D, it is preferable that A/(B₁ + B₂ + D) be 1 to 10, A/B₁ be 5 to 400 and B₂/B₁ be 0 to 50.

The isobutylene polymer thus obtained, in which the content of the low molecular weight substance whose molecular weight is 1000 or less 1000 is 5% by mass or less, exerts an excellent effect of further enhancing the dynamic viscoelastic property and the abrasion resistance of the crosslinked rubber composition.

In the present invention, the rubber component can contain at least one selected from the group consisting of a natural rubber, a butadiene rubber, a nitrile rubber, a silicone rubber, an isoprene rubber, a styrene-butadiene rubber, an isoprene-butadiene rubber, a styrene-isoprene-butadiene rubber, an ethylene-propylene-diene rubber, a halogenated butyl rubber, a halogenated isoprene rubber, a halogenated isobutylene copolymer, a chloroprene rubber, a butyl rubber and a halogenated isobutylene-p-methylstyrene rubber. In the rubber composition containing such a rubber component, the effect of enhancing the dynamic viscoelastic characteristic and the abrasion resistance by the isobutylene polymer is more remarkably exerted.

In the present invention, the content of the isobutylene polymer can be 0.5 to 70 parts by mass per 100 parts by mass of the rubber component. According to such a rubber composition, a crosslinked rubber composition more excellent in dynamic viscoelastic property, abrasion resistance, water vapor barrier property and oxygen barrier property is obtained.

In the present invention, the rubber component may be substantially a styrene-butadiene rubber. The crosslinked rubber composition obtained from such a rubber composition is more excellent in dynamic viscoelastic characteristic and abrasion resistance, and can be more suitably used for a tread part of a pneumatic tire. Herein, "being substantially a styrene-butadiene rubber" indicates that the styrene-butadiene rubber accounts for 95% by mass or more based on the total amount of the rubber component.

The rubber composition of the present invention may further contain a crosslinking agent. The method for crosslinking the rubber component and the isobutylene polymer is not particularly limited, but, if the rubber composition contains a crosslinking agent, the crosslinking agent can more easily crosslink the rubber component and the isobutylene polymer.

The present invention also provides a crosslinked rubber composition obtained from the rubber composition, wherein the crosslinked rubber composition has a structure in which the rubber component and the isobutylene polymer are crosslinked.

Since such a crosslinked rubber composition is excellent in dynamic viscoelastic characteristic, abrasion resistance, water vapor barrier property and oxygen barrier property, it is useful as a rubber material for tires. In addition, the crosslinked rubber composition according to the present invention can also be suitably used in not only tire applications but also industrial rubber member applications such as an industrial belt and an industrial rubber hose.

The present invention also provides a pneumatic tire containing the crosslinked rubber composition in a tread part. Such a pneumatic tire is excellent in rolling resistance characteristic, braking property and abrasion resistance because the crosslinked rubber composition is excellent in dynamic viscoelastic characteristic and abrasion resistance.

The present invention further provides a method for producing an isobutylene polymer having a structural unit represented by the following formula (1) and a structural unit represented by the following formula (2): 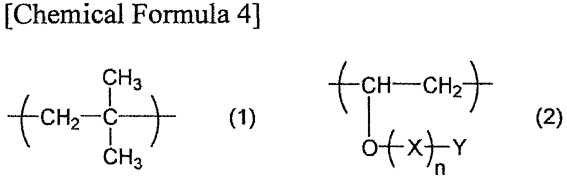 wherein, X represents a divalent group, Y represents a substituted or unsubstituted alicyclic group having an unsaturated bond, and n represents 0 or 1.

The method for producing an isobutylene polymer according to the present invention includes a step of copolymerizing isobutylene and a vinyl ether compound represented by the following formula (7):

CH₂=CH-O-(X)ₙ-Y (7)

wherein X, represents a divalent group, Y represents a substituted or unsubstituted alicyclic group having an unsaturated bond, and n represents 0 or 1,
in a reaction liquid to which a Lewis acid catalyst, a protic complexing agent and an aprotic complexing agent are added.

In addition, in the method for producing an isobutylene polymer according to the present invention, when the total molar number of the Lewis acid catalyst, the total molar number of the protic complexing agent and the total molar number of the aprotic complexing agent, added to the reaction liquid, are defined as A, B₁ and B₂, respectively, and the total molar number of the vinyl ether compound subjected to the copolymerization is defined as D, A/(B₁+B₂+D) is 1 to 10, A/B₁ is 5 to 400 and B₂/B₁ is 0 to 50.

According to such a production method, an isobutylene polymer in which the content of a low molecular weight substance whose molecular weight is 1000 or less is 5% by mass or less is obtained. In addition, according to the isobutylene polymer obtained by such a production method, it is possible to further enhance the dynamic viscoelastic characteristic and the abrasion resistance of a crosslinked rubber composition.

In the method for producing an isobutylene polymer according to the present invention, the Lewis acid catalyst can be selected from the group consisting of a boron halide compound, a titanium halide compound, a tin halide compound, an aluminum halide compound, an antimony halide compound, a tungsten halide compound, a molybdenum halide compound, a tantalum halide compound and a metal alkoxide.

### Advantageous Effects of Invention

According to the present invention, a crosslinked rubber composition useful as a rubber material for tires and a rubber composition for obtaining the crosslinked rubber composition are provided. In addition, according to the present invention, a pneumatic tire provided with a part including the crosslinked rubber composition is provided. Furthermore, according to the present invention, a method for producing an isobutylene polymer to be suitably used in the rubber composition is provided.

### Description of Embodiments

Suitable embodiments of the present invention will be described below.

In recent years, in the automobile field, in addition to problems of reduction in fuel consumption and driving stability, braking property on a wet pavement, snow, a freezing pavement, and the like have been important problems. Then, with such problems, demands for a rubber material for tires have been further severe.

Examples of basic demand characteristic for a rubber material for tires, particularly for use in a tread part of a tire, include the following.
(1) Excellent in fracture resistance and abrasion resistance to repeated stress such as bending and elongation.
(2) Low rolling resistance (favorable rolling resistance characteristic).
(3) Excellent in braking property (wet-gripping property) on a wet pavement.

With respect to (2), it is known that as the loss coefficient (tanδ) measured at a frequency of 10 to 100 Hz and at around 60°C by a dynamic viscoelastic test of a rubber material is smaller, the rubber material is more excellent in rolling resistance. On the other hand, with respect to (3), it is known that as the loss coefficient (tanδ) measured at a frequency of 10 to 100 Hz and at around 0°C by a dynamic viscoelastic test of a rubber material is larger, the rubber material is more excellent in braking property.

Among these performances, both (2) and (3) are characteristics relating to the hysteresis loss of a rubber material. In general, if the hysteresis loss is larger, a gripping force is higher and braking performances are enhanced, but rolling resistance is also higher to result in an increase in fuel consumption. Thus, since gripping performance and rolling resistance characteristic are in a conflicting relationship, it is difficult to simultaneously satisfy both characteristics of (2) and (3). Actually, in a conventional rubber material, it is difficult to simultaneously satisfy both such characteristics, and even if both such characteristics are favorable, abrasion resistance may be deteriorated.

The present inventors have found that in the case where an isobutylene polymer having an alicyclic group having an unsaturated bond in the ring or out of the ring is used, a crosslinked rubber composition excellent in dynamic viscoelastic characteristic and abrasion resistance is obtained, and that in the case where the crosslinked rubber composition is used for a tread part, a tire which simultaneously satisfies favorable rolling resistance characteristic and braking property (wet-gripping property) and which is also excellent in abrasion resistance is obtained. Then, the present inventors have further found that by controlling the content of a low molecular weight substance whose molecular weight is 1000 or less in the isobutylene polymer, a crosslinked rubber composition more excellent in dynamic viscoelastic characteristic and abrasion resistance is obtained.

A rubber composition according to the present embodiment contains a rubber component having an olefinic double bond, and an isobutylene polymer having a structural unit represented by the following formula (1) and a structural unit represented by the following formula (2). Then, in the present embodiment, the content of a low molecular weight substance whose molecular weight is 1000 or less in the isobutylene polymer is 5% by mass or less based on the total amount of the isobutylene polymer. 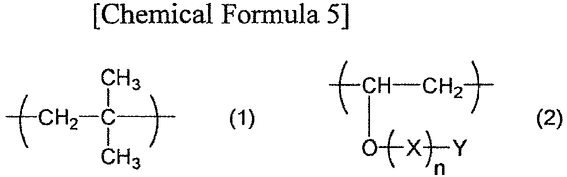 wherein, X represents a divalent group, Y represents a substituted or unsubstituted alicyclic group having an unsaturated bond, and n represents 0 or 1.

According to such a rubber composition, a crosslinked rubber composition in which the rubber component and the isobutylene polymer are crosslinked can be obtained, and in the crosslinked rubber composition, the loss coefficient (tanδ) at a high temperature (for example 60°C) is small and the loss coefficient (tanδ) at a low temperature (for example 0°C) is large in a dynamic viscoelastic test. In addition, this crosslinked rubber composition is also excellent in abrasion resistance.

In the case where the crosslinked rubber composition obtained from such a rubber composition is used for a tread part of a pneumatic tire, a pneumatic tire including both of rolling resistance characteristic and braking property (wet-gripping property), which have been conventionally in a conflicting relationship, and having an excellent abrasion resistance can be obtained.

Furthermore, since the crosslinked rubber composition is also favorable in water vapor barrier property and oxygen barrier property, it can also be suitably used for, for example, an inner liner part of a pneumatic tire.

The reason why the crosslinked rubber composition having an excellent effect as described above is obtained from the rubber composition according to the present embodiment is not necessarily clear, but it is considered because the olefinic double bond of the rubber component and the unsaturated bond of the isobutylene polymer are crosslinked and thus a structure derived from the isobutylene polymer is bonded with the rubber component via a strong chemical bond.

Herein, as described above, rolling resistance characteristic is expressed by the loss coefficient (tanδ) measured at a frequency of 10 to 100 Hz and at around 60°C by a dynamic viscoelastic test of the crosslinked rubber composition, and as the loss coefficient is smaller, rolling resistance characteristic is more favorable. In addition, braking property (wet-gripping property) is expressed by the loss coefficient (tanδ) measured at a frequency of 10 to 100 Hz and around 0°C by a dynamic viscoelastic test of the crosslinked rubber composition, and as the loss coefficient is larger, braking property is more favorable. Therefore, "being excellent in rolling resistance characteristic" means that the loss coefficient (tanδ) measured at a frequency of 10 to 100 Hz and at around 60°C by a dynamic viscoelastic test of the crosslinked rubber composition is small, and "being excellent in braking property (wet-gripping property)" means that the loss coefficient (tanδ) measured at a frequency of 10 to 100 Hz and around 0°C by a dynamic viscoelastic test of the crosslinked rubber composition is large.

Hereinafter, the rubber component, the isobutylene polymer and other components contained in the rubber composition will be described in detail.

### (Rubber Component)

The rubber component is not particularly limited as long as it has an olefinic double bond (carbon-carbon double bond), and may be any of a natural rubber, a synthetic rubber and a mixture thereof. As the rubber component, one that maintains rubber physical properties even when crosslinked is preferable. In addition, as the rubber component, one whose dynamic physical properties (mechanical physical properties) are increased when crosslinked is preferable.

In the present embodiment, it is preferable that the rubber component be at least one selected from the group consisting of a natural rubber, a butadiene rubber, a nitrile rubber, a silicone rubber, an isoprene rubber, a styrene-butadiene rubber, an isoprene-butadiene rubber, a styrene-isoprene-butadiene rubber, an ethylene-propylene-diene rubber, a halogenated butyl rubber, a halogenated isoprene rubber, a halogenated isobutylene copolymer, a chloroprene rubber, a butyl rubber and a halogenated isobutylene-p-methylstyrene rubber. In the rubber composition containing such a rubber component, the effect of enhancing dynamic viscoelastic characteristic and abrasion resistance brought by the isobutylene polymer is more remarkably exerted. In addition, the crosslinked rubber composition obtained from such a rubber composition is also more excellent in water vapor barrier property and oxygen barrier property.

As the rubber component, one containing a diene monomer such as butadiene and isoprene as a monomer unit is suitably used from the viewpoint of being easily available. Such a rubber component includes a natural rubber (NR), an isoprene rubber (IR), a butadiene rubber (BR), a styrene-butadiene rubber (SBR), a styrene-isoprene-butadiene rubber, an acrylonitrile-butadiene rubber (NBR), a chloroprene rubber (CR), and a butyl rubber. These may be used singly or may be used in combination of two or more.

When the rubber component contains a styrene-butadiene rubber, the dynamic viscoelastic characteristic and the abrasion resistance of the crosslinked rubber composition tend to be further enhanced. In this case, the content of the styrene-butadiene rubber is preferably 90% by mass or more and more preferably 95% by mass or more based on the total amount of the rubber component. As such a rubber component, a styrene-butadiene rubber alone, or a mixture prepared by mixing a styrene-butadiene rubber with at least one selected from the group consisting of a natural rubber, an isoprene rubber and a butadiene rubber is suitably used. According to the rubber composition containing such a rubber component, a crosslinked rubber composition particularly suitable as a rubber material for use in a tread part of a pneumatic tire is obtained, and according to the crosslinked rubber composition, a pneumatic tire more excellent in rolling resistance characteristic, abrasion resistance and braking property is obtained.

In addition, when the rubber component contains at least one butyl rubber component selected from a butyl rubber and a halogenated butyl rubber, the water vapor barrier property and the oxygen barrier property of the crosslinked rubber composition is further enhanced. In this case, the content of the butyl rubber component is preferably 10 to 100% by mass and more preferably 50 to 100% by mass based on the total amount of the rubber component. According to the rubber composition containing such a rubber component, a crosslinked rubber composition particularly suitable as a rubber material for use in an inner liner part of a pneumatic tire is obtained, and according to the crosslinked rubber composition, a pneumatic tire in which air leakage is sufficiently reduced is obtained.

The weight average molecular weight of the rubber component is preferably larger than the weight average molecular weight of the isobutylene polymer, and can be in a range of more than 500000 and 2000000 or less, for example.

The content of the rubber component in the rubber composition is preferably 20 to 90% by mass and more preferably 30 to 80% by mass based on the total amount of the solid content in the rubber composition. The content can be 20 to 80% by mass, and can be 30 to 70% by mass. According to such a rubber composition, the crosslinked rubber composition is effectively obtained, and the abrasion resistance of the crosslinked rubber composition obtained is more excellent.

### (Isobutylene Polymer)

The isobutylene polymer is a polymer having the structural unit represented by the formula (1) and the structural unit represented by the formula (2). The term "polymer" used herein encompasses a copolymer.

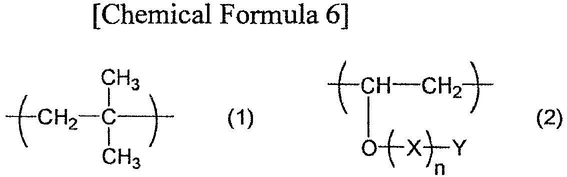

The isobutylene polymer contains the structural unit represented by the formula (1) and the structural unit represented by the formula (2), and thus has sufficient crosslinkability. Therefore, according to the isobutylene polymer, it is possible to easily and certainly introduce a polyisobutylene backbone to the rubber component.

In the formula (2), the divalent group represented by X carries the function as a linking group between ether oxygen (O) and Y in the formula. As the divalent group represented by X, an alkylene group, an alkyleneoxy group or an alkyleneoxyalkylene group is preferable. In addition, n represents 0 or 1. When "n is 0," a structure in which ether oxygen (O) and Y are directly bonded is formed.

Y in the formula (2) represents a substituted or unsubstituted alicyclic group having an unsaturated bond in the ring or out of the ring. The alicyclic group may be any of monocyclic, fused polycyclic and crosslinked polycyclic groups as long as it has an unsaturated bond. While it is preferable that the isobutylene polymer do not substantially have an unsaturated bond in its main chain, the isobutylene polymer may further have an unsaturated bond other than the unsaturated bond in the ring of the alicyclic group in each side chain. It is to be noted that the unsaturated bond can also be said to be an olefinic double bond.

Examples of the alicyclic group having an unsaturated bond in the ring include a norbornenyl group, a tricyclodecenyl group, a tetracyclodecenyl group, a tetracyclododecenyl group, and a pentacyclopentadecenyl group, and examples of the monocyclic alicyclic group include a cyclohexenyl group, a cyclooctenyl group, and a cyclododecenyl group. Each of these groups is an alicyclic group having a ring structure formed by carbon atoms and having a carbon-carbon double bond (olefinic double bond) in the ring. In the present embodiment, among such alicyclic groups, an alicyclic group not including a polar group, that is, composed of only carbon atoms and hydrogen atoms is preferable.

The alicyclic group preferably has 6 to 15 carbon atoms and more preferably 7 to 10 carbon atoms. If the alicyclic group has less than 6 carbon atoms, the formation of a cyclic group tends to be difficult, and if the alicyclic group has more than 15 carbon atoms, it tends to be difficult to obtain raw materials per se.

Suitable examples of the alicyclic group having an unsaturated bond in the ring include dicyclopentadienyl alicyclic groups such as dicyclopentadienyl, methyldicyclopentadienyl and dihydrodicyclopentadienyl (also called tricyclo[5.2.1.0^{2,6}]deca-8-enyl.); tetracyclododecenyl alicyclic groups such as tetracyclo[6.2.1.1^{3,6}.0^{2,7}]dodeca-4-enyl, 9-methyltetracyclo [6.2.1.1^{3,6}.0^{2,7}]dodeca-4-enyl, 9-ethyltetracyclo[6.2.1.1^{3,6}.0^{2,7}]dodeca-4-enyl, 9-cyclohexyltetracyclo[6.2.1.1^{3,6}.0^{2,7}]dodeca-4-enyl, 9-cyclopentyltetracyclo[6.2.1.1^{3,6}.0^{2,7}]dodeca-4-enyl, 9-methylenetetracyclo[6.2.1.1^{3,6}.0^{2,7}]dodeca-4-enyl, 9-ethylidenetetracyclo[6.2.1.1^{3,6}.0^{2,7}]dodeca-4-enyl, 9-vinyltetracyclo[6.2.1.1^{3,6}.0^{2,7}]dodeca-4-enyl, 9-propenyltetracyclo[6.2.1.1^{3,6}.0^{2,7}]dodeca-4-enyl, 9-cyclohexenyltetracyclo[6.2.1.1^{3,6}0^{2,7}]dodeca-4-enyl, 9-cyclopentenyltetracyclo[6.2.1.1^{3,6}.0^{2,7}]dodeca-4-enyl and 9-phenyltetracyclo[6.2.1.1^{3,6}.0^{2,7}]dodeca-4-enyl; norbomenyl alicyclic groups such as 2-norbornenyl, 5-methyl-2-norbomenyl, 5-ethyl-2-norbornenyl, 5-butyl-2-norbornenyl, 5-hexyl-2-norbornenyl, 5-decyl-2-norbornenyl, 5-cyclohexyl-2-norbornenyl, 5-cyclopentyl-2-norbornenyl, 5-ethylidene-2-norbornenyl, 5-vinyl-2-norbornenyl, 5-propenyl-2-norbomenyl, 5-cyclohexenyl-2-norbornenyl, 5-cyclopentenyl-2-norbomenyl, 5 -phenyl-2-norbornenyl, tetracyclo[9.2.1.0^{2,10}.0^{3,8}]tetradeca-3,5,7,12-tetraenyl (also called 1,4-methano-1,4,4a,9a-tetrahydro-9H-fluorenyl.) and tetracyclo[10.2.1.0^{2,11}.0^{4,9}]pentadeca-4,6,8,13-tetraenyl (also called 1,4-methano-1,4,4a,9,9a,10-hexahydroanthracenyl.); and pentacyclic or higher cyclic olefinic acyclic groups such as pentacyclo[6.5.1.1^{3,6}.0^{2,7}.0^{9,13}]pentadeca-4,10-dienyl, pentacyclo[9.2.1.1^{4,7}.0^{2,10}.0^{3,8}]pentadeca-5,12-dienyl and hexacyclo[6.6.1.1^{3,6}.1^{10,13}.0^{2,7}.0^{9,14}]heptadeca-4-enyl.

Examples of the alicyclic group having an unsaturated bond out of the ring include groups having a ring structure such as a cyclobutane backbone, a cyclopentane backbone, a cyclohexane backbone, a cycloheptane backbone, a cyclooctane backbone, a norbomane backbone, a tricyclodecane backbone, and a tetracyclododecane backbone. Herein, "having an unsaturated bond out of the ring" means that at least one of two carbon atoms constituting an unsaturated bond is a carbon atom other than the carbon atoms constituting a ring structure.

Examples of the alicyclic group having an unsaturated bond out of the ring include groups obtained by eliminating one hydrogen atom from a cyclic compound selected from the group consisting of vinylcyclobutane, vinylcyclopentane, vinylcyclohexane, vinylcycloheptane, vinylcyclooctane, vinylnorbornene, ethylidenecyclobutane, vinyltricyclodecane, vinyltetracyclododecane, ethylidenecyclohexane, ethylidenecyclooctane, ethylidenenorbornene, ethylidenetricyclodecane, ethylidenetetracyclododecane, isopropylidenecyclobutane, isopropylidenecyclopentane, isopropylidenecyclohexane, isopropylidenecycloheptane, isopropylidenecyclooctane, isopropylidenenorbornene, isopropylidenetricyclodecane, isopropylidenetetracyclododecane, cyclopentylidenecyclopentane, cyclopentylidenecyclohexane, cyclopentylidenecycloheptane, cyclopentylidenecyclooctane, cyclopentylidenenorbornene, cyclopentylidenetricyclodecane and cyclopentylidenetetracyclododecane.

In addition, examples of the alicyclic group having an unsaturated bond out of the ring include a group represented by the following formula (8). Since the isobutylene polymer having such an alicyclic group is more excellent in crosslinkability to the rubber component, a crosslinked rubber composition sufficiently crosslinked in a shorter time is obtained.

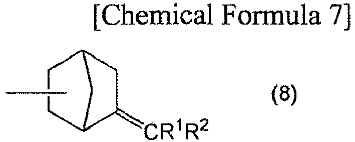

In the formula, R¹ and R² each independently represent a hydrogen atom, an alkyl group or a phenyl group, and R¹ and R² may be bonded with each other to form a ring.

Herein, "substituted or unsubstituted" means that the alicyclic group may have a substituent. Examples of the substituent include an alkyl group, a cycloalkyl group, a vinyl group, an allyl group, and an aryl group. Examples of the aryl group include a phenyl group, a naphthyl group, and a benzyl group.

In the present embodiment, it is particularly preferable that the isobutylene polymer have as the structural unit represented by the formula (2), a structural unit represented by the following formula (3) and/or a structural unit represented by the following formula (4).

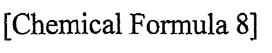

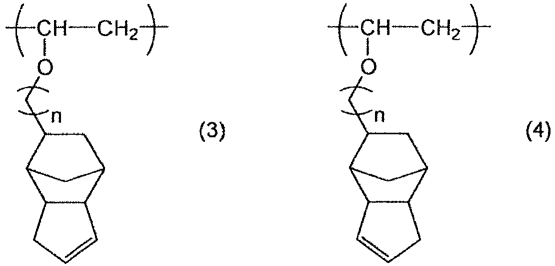

In these formulae, n represents 0 or 1.

The isobutylene polymer having the structural unit represented by the formula (3) and/or the structural unit represented by the formula (4) is particularly excellent in crosslinkability to the rubber component. Then, according to the isobutylene polymer, a crosslinked rubber composition more excellent in dynamic viscoelastic characteristic and abrasion resistance is obtained.

In the present embodiment, the isobutylene polymer may have as the structural unit represented by the formula (2), a structural unit represented by the following formula (5) and/or a structural unit represented by the following formula (6).

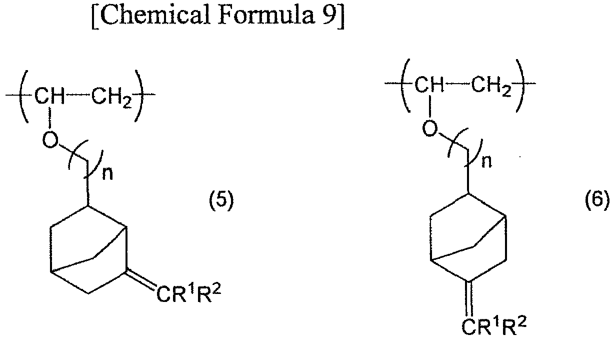

In these formulae, n represents 0 or 1, R¹ and R² each independently represents a hydrogen atom, an alkyl group or a phenyl group, and R¹ and R² may be bonded with each other to form a ring.

The isobutylene polymer having the structural unit represented by the formula (5) and/or the structural unit represented by the formula (6) is particularly excellent in crosslinkability to the rubber component. Then, according to the isobutylene polymer, a crosslinked rubber composition more excellent in dynamic viscoelastic characteristic and abrasion resistance is obtained.

In the isobutylene polymer, the copolymerization ratio of the structural unit represented by the formula (1) to the structural unit represented by the formula (2) is not particularly limited, but the molar percentage of the structural unit represented by the formula (2) is preferably 0.1 to 99% by mol, more preferably 1 to 90% by mol, and further preferably 2 to 80% by mol based on the total amount of both the structural units. The copolymerization ratio here corresponds to an average value of the copolymerization ratio of each molecules, and can be determined by measuring and comparing the intensities of the resonance signals of protons assigned to the respective structures by ¹H-NMR and/or ¹³C-NMR(500M Hz) method.

In the isobutylene polymer, the polymerization form of the structural unit represented by the above formula (1) and the structural unit represented by the above formula (2) may be any of block copolymerization or random copolymerization. In the case of a conventional isobutylene polymer, it has been difficult to subject monomers having different reactivity to random copolymerization, but in the present invention, a combination of the structural unit represented by the above formula (1) with the structural unit represented by the above formula (2) is adopted and thus even a random copolymer can be effectively obtained.

The weight average molecular weight of the isobutylene polymer is preferably 2000 to 500000, more preferably 5000 to 300000, and further preferably 10000 to 200000. The weight average molecular weight here means a weight average molecular weight (Mw) measured by the GPC method. In the case where the weight average molecular weight of the isobutylene polymer is higher than the upper limit, processability of the rubber composition and the crosslinked rubber composition to be obtained may be inferior. In the case where the weight average molecular weight is extremely low, processability of the rubber composition and the crosslinked rubber composition to be obtained is favorable, but co-crosslinkability thereof to the rubber component may be deteriorated to impair dynamic physical properties of the crosslinked rubber composition.

In the present embodiment, the content of the low molecular weight substance whose molecular weight is 1000 or less in the isobutylene polymer is 5% by mass or less, preferably 4.5% by mass or less, and more preferably 3% by mass or less based on the total amount of the isobutylene polymer. The content of the low molecular weight substance is thus controlled to thereby obtain a crosslinked rubber composition more excellent in dynamic viscoelastic characteristic and abrasion resistance.

Herein, the content of the low molecular weight substance is determined from molecular weight distribution measurement results by GPC (Gel Permeation Chromatography). Specifically, a plot of "elution time (retention time)-output (elution amount)" measured by an RI detector (Refractive Index Detector: differential refractive index detector) is converted to a plot of "molecular weight-output" using a standard curve (calibration curve) previously measured by a standard substance (polystyrene) to thereby obtain a molecular weight distribution curve, and concentration fractions of respective molecular weight components are accumulated to obtain a "molecular weight-weight fraction" plot. Thus, it is possible to determine the proportion of the low molecular weight substance whose molecular weight is 1000 or less (% by mass).

The content of the isobutylene polymer in the rubber composition is preferably 0.5 to 70 parts by mass and more preferably 1 to 60 parts by mass per 100 parts by mass of the rubber component. The content can also be 3 to 30 parts by mass. According to such a rubber composition, a crosslinked rubber composition more excellent in dynamic viscoelastic characteristic, abrasion resistance, water vapor barrier property and oxygen barrier property can be obtained.

The method for producing the isobutylene polymer is not particularly limited, and for example, a method in which isobutylene and a cationic polymerizable monomer containing a vinyl ether compound represented by the following formula (7) are polymerized in the presence of a Lewis acid catalyst is suitable. In the formula, X, n and Y are the same as X, n and Y in the formula (2), respectively.

CH₂=CH-O-(X)ₙ-Y (7)

As described above, while the present inventors have found that the content of the low molecular weight substance in the isobutylene polymer is controlled to thereby obtain a crosslinked rubber composition more excellent in dynamic viscoelastic characteristic and abrasion resistance, the present inventors have further found that the isobutylene polymer obtained by a specified production method is used to thereby provide a crosslinked rubber composition further excellent in the dynamic viscoelastic characteristic and the abrasion resistance of the crosslinked rubber composition.

That is, it is preferable that the isobutylene polymer be a polymer obtained by copolymerizing isobutylene and the vinyl ether compound represented by the formula (7) in a reaction liquid to which a Lewis acid catalyst and a protic complexing agent is added and an aprotic complexing agent is further added if necessary.

In addition, in the above copolymerization, when the total molar number of the Lewis acid catalyst, the total molar number of the protic complexing agent and the total molar number of the aprotic complexing agent, added to the reaction liquid, are defined as A, B₁ and B₂, respectively, and the total molar number of the vinyl ether compound subjected to the copolymerization is defined as D, it is preferable that A/(B₁+B₂+D) be 1 to 10, A/B₁ be 5 to 400 and B₂/B₁ be 0 to 50.

The isobutylene polymer thus obtained, in which the content of the low molecular weight substance whose molecular weight is 1000 or less 1000 is 5% by mass or less, exerts an excellent effect of further enhancing the dynamic viscoelastic property and the abrasion resistance of the crosslinked rubber composition.

Hereinafter, one embodiment of the method for producing such an isobutylene polymer will be described in detail.

### (Method for Producing Isobutylene Polymer)

The production method according to the present embodiment comprises a step of copolymerizing isobutylene with a vinyl ether compound represented by formula (7) in a reaction liquid to which a Lewis acid catalyst and a protic complexing agent is added and an aprotic complexing agent is further added if necessary.

Then, in the present embodiment, when the total molar number of the Lewis acid catalyst, the total molar number of the protic complexing agent and the total molar number of the aprotic complexing agent, added to the reaction liquid, are defined as A, B₁ and B₂, respectively, and the total molar number of the vinyl ether compound subjected to the copolymerization is defined as D, A/(B₁+B₂+D) is 1 to 10, A/B₁ is 5 to 400 and B₂/B₁ is 0 to 50.

The Lewis acid catalyst can be selected from the group consisting of, for example, a boron halide compound, a titanium halide compound, a tin halide compound, an aluminum halide compound, an antimony halide compound, a tungsten halide compound, a molybdenum halide compound, a tantalum halide compound and a metal alkoxide.

More specific examples of the Lewis acid catalyst include boron halide compounds such as boron trichloride, boron trifluoride and boron trifluoride; titanium halide compounds such as titanium tetrachloride, titanium tetrabromide and titanium tetraiodide; tin halide compounds such as tin tetrachloride, tin tetrabromide and tin tetraiodide; aluminum halide compounds such as aluminum trichloride, alkyldichloroaluminum and dialkylchloroaluminum; antimony halide compounds such as antimony pentachloride and antimony pentafluoride; tungsten halide compounds such as tungsten pentachloride; molybdenum halide compounds such as molybdenum pentachloride; tantalum halide compounds such as tantalum pentachloride; and metal alkoxides such as tetraalkoxytitanium.

As the Lewis acid catalyst, it is possible to use a Lewis acid catalyst that forms a complex with a complexing agent, for example, a diethyl ether complex of boron trifluoride. In the case where such a Lewis acid catalyst is used, the molar number of the complexing agent that forms a complex with the Lewis acid catalyst is also included in the total molar number of the protic complexing agent or the aprotic complexing agent.

The complexing agent is a compound that can be coordinated to the center metal of the Lewis acid catalyst to form a complex, and among such complexing agents, a complexing agent having a proton donating ability is referred to as a protic complexing agent, and a complexing agent not having a proton donating ability is referred to as an aprotic complexing agent. Herein, "having a proton donating ability" can also be rephrased to "capable of acting as an initiator for copolymerization reaction.

Examples of the complexing agent include oxygen-containing compounds such as water, alcohols, ethers, phenols, ketones, aldehydes, esters, organic acids and acid anhydrides; nitrogen-containing compounds such as primary amines, secondary amines and tertiary amines; sulfur-containing compounds such as thiols and thioethers; phosphorus-containing compounds such as triphenylphosphine; and inorganic compounds such as inorganic acids; and each of them can be used as a protic complexing agent or an aprotic complexing agent.

As the protic complexing agent, water, alcohols, phenols, organic acids, primary amines, secondary amines, thiols, and the like can be suitably used, and among them, alcohols and phenols are preferable.

As the alcohols, alcohols having 1 to 20 carbon atoms are preferable, and alcohols having 1 to 10 carbon atoms are more preferable. More specifically, examples thereof include methanol, ethanol, n-propyl alcohol, isopropyl alcohol, and tert-butyl alcohol, and among them, methanol, ethanol, and tert-butyl alcohol are preferable.

Examples of the phenols include phenol, o-cresol, m-cresol, and p-cresol, and among them, phenol is preferable.

As the aprotic complexing agent, ethers, ketones, aldehydes, esters, tertiary amines, thioethers, and the like can be suitably used, and among them, ethers and esters are preferable.

As the ethers, a dialkyl ether is preferable, a dialkyl ether in which the alkyl group has 1 to 20 carbon atoms is more preferable, and a dialkyl ether in which the alkyl group has 1 to 10 carbon atoms is further preferable.

As the esters, one in which an ester bond is formed by an aliphatic alcohol having 1 to 6 carbon atoms and an aliphatic carboxylic acid having 1 to 6 carbon atoms is preferable. More specifically, examples thereof include methyl formate, ethyl formate, methyl acetate, ethyl acetate, propyl acetate, butyl acetate, pentyl acetate, hexyl acetate, and ethyl hexanoate, and among them, ethyl acetate is preferable.

The relationship among the total molar number A of the Lewis acid catalyst to be added to the reaction liquid, the total molar number B₁ of the protic complexing agent to be added to the reaction liquid, the total molar number B₂ of the aprotic complexing agent to be added to the reaction liquid, the total molar number C of the isobutylene to be subjected to copolymerization, and the total molar number D of the vinyl ether compound represented by the formula (7) to be subj ected to copolymerization is as follows.

The ratio of the total molar number A of the Lewis acid catalyst to the total molar number B₁ of the protic complexing agent, A/B₁, is 5 to 400. The protic complexing agent has been usually used in an equimolar to the Lewis acid catalyst or more (ratio A/B₁ is 1 or less) during the production of an isobutylene polymer, but in contrast, the amount of the protic complexing agent used is set to be less than the amount of the Lewis acid catalyst used in the present embodiment. In the present embodiment, because of the ratio A/B₁ in the above range, an isobutylene polymer in which the content proportion of the low molecular weight substance is small can be obtained, and an isobutylene polymer excellent in effect of enhancing dynamic viscoelastic characteristic and abrasion resistance in a crosslinked rubber composition can be obtained.

It is considered that when a cationic polymerizable monomer such as isobutylene is polymerized, the protic complexing agent serves as a polymerization initiator, and that as the amount of the protic complexing agent is larger, activity (monomer conversion rate) is increased. Therefore, in a conventional production method, it is considered that the ratio A/B₁ is decreased (for example 1 or less) in order to increase the monomer conversion rate.

The ratio A/B₁ is preferably 5 to 400 and more preferably 10 to 300. When the ratio A/B₁ is in the above range, the effects of the invention are more remarkably exerted.

The ratio of the total molar number B₂ of the protic complexing agent to the total molar number B₁ of the protic complexing agent, B₂/B₁, is 0 to 50. Here, the ratio B₂/B₁ being 0 indicates that the aprotic complexing agent is not added to the reaction liquid.

The ratio B₂/B₁ is preferably 0 to 50 and more preferably 0 to 30. In the present embodiment, the ratio B₂/B₁ is set to be in the above range, and thus the content proportion of the low molecular weight substance can be further reduced and an isobutylene polymer whose weight average molecular weight is high is obtained. The reason for this is not necessarily clear, but is considered because a side reaction such as a chain transfer reaction is suppressed by the aprotic complexing agent.

The ratio of the total molar number A of the Lewis acid catalyst to the total molar quantity (B₁+B₂+D) of the protic complexing agent, the aprotic complexing agent and the vinyl ether compound, A/(B₁+B₂+D), is 1 to 10. In the present embodiment, not only the amount of the protic complexing agent per that of the Lewis acid catalyst but also the amount of the Lewis acid catalyst per the total amount of the protic complexing agent, the aprotic complexing agent and the vinyl ether compound is defined. Thus, an isobutylene polymer in which the content proportion of the low molecular weight substance is lower can be obtained, and further an isobutylene polymer more excellent in effect of enhancing dynamic viscoelastic characteristic and abrasion resistance in a crosslinked rubber composition can be obtained.

The ratio A/(B₁+B₂+D) is preferably 1 to 10 and more preferably 1 to 5. When the ratio A/(B₁+B₂+D) is in the above range, the effects of the present invention are more remarkably exerted.

The ratio of the total molar number C of isobutylene to the total molar number D of the vinyl ether compound, C/D, can be 0.5 to 1000, and is preferably 2 to 200. According to such a production method, an isobutylene polymer having a suitable copolymerization ratio is obtained, and according to the isobutylene polymer, the effects of the present invention are more remarkably exerted.

It is preferable that the reaction liquid contain a solvent. It is preferable that the solvent be at least one selected from the group consisting of halogenated hydrocarbons, aliphatic hydrocarbons and aromatic hydrocarbons. One of the solvents may be used singly, or two or more thereof may be mixed and used.

Examples of the halogenated hydrocarbons include chloroform, methylene chloride, 1,1-dichloroethane, 1,2-dichloroethane, n-propyl chloride, n-butyl chloride, 1-chloropropane, 1-chloro-2-methylpropane, 1-chlorobutane, 1-chloro-2-methylbutane, 1-chloro-3-methylbutane, 1-chloro-2,2-dimethylbutane, 1-chloro-3,3-dimethylbutane, 1-chloro-2,3-dimethylbutane, 1-chloropentane, 1-chloro-2-methylpentane, 1-chloro-3-methylpentane, 1-chloro-4-methylpentane, 1-chlorohexane, 1-chloro-2-methylhexane, 1-chloro-3-methylhexane, 1-chloro-4-methylhexane, 1-chloro-5-methylhexane, 1-chloroheptane, 1-chlorooctane, 2-chloropropane, 2-chlorobutane, 2-chloropentane, 2-chlorohexane, 2-chloroheptane, 2-chlorooctane, and chlorobenzene.

As the aliphatic hydrocarbons, propane, butane, pentane, neopentane, hexane, heptane, octane, cyclohexane, methylcyclohexane, and ethylcyclohexane are preferable. As the aromatic hydrocarbons, benzene, toluene, xylene, and ethylbenzene are preferable.

In consideration of the solubility of the isobutylene polymer to be obtained, the viscosity of a solution and easiness in heat removal, it is preferable to use the solvent in such an amount that the concentration of the isobutylene polymer after copolymerization is 0.1 to 80% by mass. From the viewpoint of enhancing production efficiency and operability, it is preferable to use the solvent in such an amount that the concentration of the isobutylene polymer after copolymerization is 1 to 50% by mass.

The monomer concentration at polymerization is preferably about 0.1 to 8 mol/l and more preferably about 0.5 to 5 mol/l. The amount of the solvent used at polymerization is preferably 0.5 to 100 times that of the monomer used in molar ratio in view of a proper viscosity and control of heat generation.

It is preferable to perform the copolymerization under an atmosphere of an inert gas such as nitrogen, argon, and helium. With respect to the pressure at the copolymerization, it is possible to adopt any condition, for example, under ordinary pressure or under pressurization, in consideration of the type of the monomer, the type of the solvent, the polymerization temperature, and the like. In addition, it is preferable to perform the copolymerization under a sufficient stirring condition so that the polymerization system is uniform.

The copolymerization can be performed in, for example, a batch system or a semi-batch system in which the solvent, the Lewis acid catalyst, the protic complexing agent, the aprotic complexing agent, isobutylene, the vinyl ether compound represented by the formula (7), and the like are sequentially charged to one reaction vessel. The copolymerization may also be a continuous method in which the solvent, the Lewis acid catalyst, the protic complexing agent, the aprotic complexing agent, isobutylene, the vinyl ether compound represented by the formula (7), and the like are reacted while being continuously charged to a system. In the case of the continuous method, the respective components are continuously supplied into a system in such a ratio as to satisfy the above ratio relationship.

The temperature condition at the copolymerization is preferably about -100 to +50°C and more preferably about -40 to +10°C. The reaction time at the copolymerization is usually about 10 minutes to 4 hours and preferably about 30 minutes to 2 hours.

The form of a reactor for use in the copolymerization is not particularly limited, but it is preferably a stirred-tank reactor. The structure thereof is not particularly limited, but is preferably, for example, a structure which can conduct cooling in a jacket part, and which can allow the monomer, and the Lewis acid catalyst and the complexing agent sequentially supplied to be uniformly mixed and reacted. The structure may also be a structure which can be provided with incidental equipment such as an internal cooling coil or a reflux condenser to enhance a cooling ability, and which can be provided with a baffle plate to make a mixing state favorable. The stirring blade for use in the stirred-tank reactor is not particularly limited, but is preferably one in which circulation and mixing performances of the reaction liquid in the vertical direction are high, and there are suitably used a stirring blade such as a (multistage) pitched paddle blade and a turbine blade in a relatively low viscosity region in which the viscosity of the polymerization/reaction solution is in the order of several centipoises, a large blade having a large bottom paddle such as a Maxblend blade, a Fullzone blade, a Sunmeller blade, a Hi-F Mixer blade and a blade as described in Japanese Patent Application Laid-Open No. 10-24230 in a middle viscosity region of several tens of centipoises to several hundreds of poises, and an anchor blade, a (double) helical ribbon blade, a logborn blade, or the like in a high viscosity region of several hundreds of poises or more.

Hereinafter, one aspect of the method for producing the isobutylene polymer will be shown.

In the present aspect, the Lewis acid catalyst, the protic complexing agent, the aprotic complexing agent, isobutylene and the vinyl ether compound are continuously supplied to a reactor to perform copolymerization of isobutylene and the vinyl ether compound.

In the present aspect, the amount of each of the components supplied is adjusted to thereby set the ratio A/(B₁+B₂+D), the ratio A/B₁ and the ratio B₂/B₁ in the respective above ranges. That is, each of the components is supplied to the reactor so that when the amount of the Lewis acid catalyst supplied is defined as a (mol/h), the amount of the protic complexing agent supplied is defined as b₁ (mol/h), the amount of the aprotic complexing agent supplied is defined as b₂ (mol/h), the amount of isobutylene supplied is defined as c (mol/h) and the amount of the vinyl ether compound supplied is defined as d (mol/h), a/(b₁+b₂+d) is 1 to 10, a/b₁ is 5 to 400 and b₂/b₁ is 0 to 50.

The method for supplying each of the components to the reactor is not particularly limited, and for example, the production method of the present aspect can be performed by supplying a first supply liquid including isobutylene, the vinyl ether compound and the solvent, a second supply liquid including the protic complexing agent and the aprotic complexing agent, and a third supply liquid including the Lewis acid catalyst to the reactor. In the case where the Lewis acid catalyst is gaseous, a gas including the Lewis acid catalyst may also be supplied to the reactor.

Each of the components supplied to the reaction liquid is continuously discharged outside the reactor through predetermined reaction conditions. To the reaction liquid discharged from the reactor is added, for example, water, thereby making it possible to stop the copolymerization reaction.

One embodiment of the method for producing the isobutylene polymer is described above, but the isobutylene polymer included in the rubber composition is not necessarily required to be one produced by the above production method.

The isobutylene polymer may be one composed of only the structural unit represented by the formula (1) and the structural unit represented by the formula (2), but may further have a structural unit different from these two structural units. For example, block copolymerization may also be formed by subsequently reacting a cationic polymerizable monomer other than isobutylene with the isobutylene polymer obtained by the production method. In the case where a block copolymer is produced, one having a block having the structural unit represented by the formula (1) and the structural unit represented by the formula (2) and a block including an aromatic vinyl compound as a main component (namely, block containing an aromatic vinyl compound in an amount of 50% by mass or more) is preferable. Here, as the aromatic vinyl compound, styrene is preferable.

### (Other Components)

The rubber composition may further contain various reinforcing agents, fillers, rubber extender oils, softeners, and the like for use in the rubber industry field.

The reinforcing agents include carbon black and silica.

Carbon black is suitably used as the reinforcing agent from the viewpoint of achieving effects such as enhancement in abrasion resistance, enhancement in rolling resistance characteristic, and prevention of cracking and crazing due to ultraviolet (prevention of ultraviolet degradation). The types of carbon black are not particularly limited, and it is possible to use conventionally known carbon black, for example, carbon black such as furnace black, acetylene black, thermal black, channel black, and graphite. Physical properties such as the particle size, the pore volume and the specific surface area of carbon black are not particularly limited, and it is possible to appropriately use various carbon black conventionally used in the rubber industry, such as SAF, ISAF, HAF, FEF, GPF, and SRF (all are abbreviations of carbon black classified according to ASTM standard D-1765-82a in U.S.A.). In the case where carbon black is used, the amount thereof compounded is preferably 5 to 80 parts by mass and more preferably 10 to 60 parts by mass per 100 parts by mass of the rubber component. The amount can be 30 to 80 parts by mass, and can be 40 to 60 parts by mass. When the amount thereof compounded is in such a range, the effects as the reinforcing agent can be favorably achieved in the rubber composition and the crosslinked rubber composition according to the present embodiment.

As silica, one conventionally used as the reinforcing agent for rubbers can be used without particular limitations, and examples thereof include dry type white carbon, wet type white carbon, synthetic silicate white carbon, colloidal silica, and precipitated silica. The specific surface area of silica is not particularly limited, but silica in which the specific surface area is usually in the range of 40 to 600 m²/g and preferably in the range of 70 to 300 m²/g can be used, and silica in which the primary particle size is 10 to 1000 nm can be used. These may be used singly or may be used in combination of two or more. The amount of silica used is preferably 0.1 to 150 parts by mass, more preferably 10 to 100 parts by mass, and further preferably 30 to 100 parts by mass, per 100 parts by mass of the rubber component.

For the purpose of compounding silica, a silane coupling agent may be compounded to the rubber composition. Examples of the silane coupling agent include vinyltrichlorosilane, vinyltriethoxysilane, vinyltris(β-methoxy-ethoxy)silane, β-(3,4-epoxycyclohexyl)-ethyltrimethoxysilane, 3-chloropropyltrimethoxysilane, 3-chloropropyltriethoxysilane, 3-mercaptopropyltrimethoxysilane, 3-mercaptopropyltriethoxysilane, bis(3-(triethoxysilyl)propyl)tetrasulfide, and bis(3-(triethoxysilyl)propyl)disulfide. These may be used singly or may be used in combination of two or more. The amount of the silane coupling agent added can be appropriately changed depending on the amount of silica compounded to be desired, but it is preferably 0.1 to 20 parts by mass per 100 parts by mass of the rubber component.

As the filler, it is possible to use mineral powders such as clay and talc, carbonates such as magnesium carbonate and calcium carbonate, hydrated alumina such as aluminum hydroxide, and the like.

As the rubber extender oil, it is possible to use an aromatic oil, a naphthenic oil, a paraffinic oil, and the like conventionally used. The amount of the rubber extender oil compounded is preferably 0 to 100 parts by mass per 100 parts by mass of the rubber component.

Examples of the softener include vegetable softeners such as tall oils mainly containing linoleic acid, oleic acid, and abietic acid, pine tar, a canola oil, a cottonseed oil, a peanut oil, a castor oil, a palm oil and factice, paraffinic oils, naphthenic oils, aromatic oils, and phthalic acid derivatives such as dibutyl phthalate. The amount of the softener compounded is preferably 0 to 50 parts by mass per 100 parts by mass of the rubber component.

The rubber composition according to the present embodiment may also contain various additives for use in the rubber industry, for example, one or two or more of an antioxidant, sulfur, a crosslinking agent, a vulcanization accelerator, a vulcanization retarder, a peptizer, a process oil, and a plasticizer, if necessary. The amount of each of these additives compounded is preferably 0.1 to 10 parts by mass per 100 parts by mass of the rubber component.

The rubber component and the isobutylene polymer in the rubber composition according to the present embodiment are crosslinked to thereby obtain a crosslinked rubber composition. Here, the crosslinking method is not particularly limited, but it is preferable to perform crosslinking by a crosslinking agent.

That is, it is preferable that the rubber composition according to the present embodiment further contain a crosslinking agent. As the crosslinking agent, one usually used for crosslinking a rubber can be used without particular limitations, and can be appropriately selected depending on the rubber component and the isobutylene polymer. Examples of the crosslinking agent include sulfur crosslinking agents such as sulfur, morpholine disulfide and alkylphenol disulfide; and organic peroxide crosslinking agents such as cyclohexanone peroxide, methyl acetoacetate peroxide, tert-butylperoxy isobutyrate, tert-butylperoxy benzoate, benzoyl peroxide, lauroyl peroxide, dicumyl peroxide, di-tert-butyl peroxide and 1,3-bis(tert-butylperoxyisopropyl)benzene. The content of such a crosslinking agent is preferably 0.1 to 5 parts by mass, more preferably 0.5 to 3 parts by mass, and further preferably 1 to 2 parts by mass, per 100 parts by mass of the rubber component.

The rubber composition according to the present embodiment may also contain a vulcanization accelerator and vulcanization aid, if necessary. The vulcanization accelerator and the vulcanization aid are not particularly limited, and can be appropriately selected and used depending on the rubber component, the isobutylene polymer and the crosslinking agent contained in the rubber composition. Herein, "vulcanization" indicates crosslinking via at least one sulfur atom.

Examples of the vulcanization accelerator include thiuram accelerators such as tetramethylthiuram monosulfide, tetramethylthiuram disulfide and tetraethylthiuram disulfide; thiazole accelerators such as 2-mercaptobenzothiazole and dibenzothiazyl disulfide; sulfenamide accelerators such as N-cyclohexyl-2-benzothiazyl sulfenamide and N-oxydiethylene-2-benzothiazolyl sulfenamide; guanidine accelerators such as diphenylguanidine and diorthotolylguanidine; aldehyde-amine accelerators such as a n-butylaldehyde-aniline condensation product and a butylaldehyde-monobutylamine condensation product; aldehyde-ammonia accelerators such as hexamethylenetetramine; and thiourea accelerators such as thiocarbanilide. In the case where these vulcanization accelerators are compounded, one thereof may be used singly, or two or more thereof may be used in combination. The content of the vulcanization accelerator is preferably 0.1 to 10 parts by mass per 100 parts by mass of the rubber component.

Examples of the vulcanization aid include metal oxides such as zinc oxide (zinc flower) and magnesium oxide; metal hydroxides such as calcium hydroxide; metal carbonates such as zinc carbonate and basic zinc carbonate; fatty acids such as stearic acid and oleic acid; aliphatic metal salts such as zinc stearate and magnesium stearate; amines such as di-n-butylamine and dicyclohexylamine; and ethylene dimethacrylate, diallyl phthalate, N,N-m-phenylenedimaleimide, triallyl isocyanurate, and trimethylolpropane trimethacrylate. In the case where these vulcanization aids are compounded, one thereof may be used singly, or two or more thereof may be used in combination. The content of the vulcanization aid is preferably 0.1 to 10 parts by mass per 100 parts by mass of the rubber component.

The rubber composition according to the present embodiment can be produced by applying a method generally used as a production method of a rubber composition. For example, it can be produced by mixing the respective components using a kneading machine such as Brabender, a Banbury mixer, and a roll mixer.

### (Crosslinked Rubber Composition)

The crosslinked rubber composition according to the present embodiment has a structure in which the rubber component and the isobutylene polymer are crosslinked. Such a crosslinked rubber composition is excellent in dynamic viscoelastic characteristic, abrasion resistance, water vapor barrier property and oxygen barrier property. Therefore, the crosslinked rubber composition according to the present embodiment is useful as a rubber material for tires. Specifically, for example, when the crosslinked rubber composition according to the present embodiment is used for a tread part of a tire, braking property (wet-gripping property) and rolling resistance characteristic are enhanced, and abrasion resistance is also excellent as compared with the case where the isobutylene polymer is not compounded.

The crosslinked rubber composition according to the present embodiment can be produced from the rubber composition by a method usually used as a method for crosslinking a rubber. For example, in the case where the rubber composition contains the crosslinking agent, the rubber composition is subjected to thermocompression molding to thereby obtain a crosslinked rubber composition which is molded in the desired form and which has a structure in which the rubber component and the isobutylene polymer are crosslinked.

Since the crosslinked rubber composition according to the present embodiment is excellent in dynamic viscoelastic characteristic, abrasion resistance, water vapor barrier property and oxygen barrier property, it can be used in various applications in which these properties are required. For example, it can be suitably used in industrial rubber member applications such as an industrial belt and an industrial rubber hose. It can also be used in applications such as a rubber belt, a rubber hose, a rubber roll, a husking roll, a mold cure product, a vibration-proofing rubber, an antiglare material, ebonite, lining, a magnetic rubber, a sponge rubber, a rolled product, an extruded product, a tape product, a rubber adhesive, rubber footwear, a rubber cloth, a cut thread, a cut sheet product, an eraser, a medical rubber product, an electric wire, a conductive rubber, a microporous rubber separator, a gas mask, underwater sporting goods, a bowling ball, toys, balls, a golf ball, a dipped latex product, a cast latex product, a latex rubber thread, a foam rubber, a urethane foam, other latex products, paper sizing, carpet backing, synthetic leather, a sealing material, a sheet waterproof material (synthetic polymer roofing), a coating waterproof material, a polymer cement mortar (latex cement mortar), rubber asphalt, and latex paint.

The crosslinked rubber composition according to the present embodiment can be particularly suitably used in a tire application, and can be used in applications such as automobile tire/tube, an inner liner, a bead filler, ply, a belt, a tread rubber, a side rubber, various seal materials, sealant, aircraft tire/tube, bicycle tire/tube, a solid tire, and a retreated tire.

Specifically, the crosslinked rubber composition according to the present embodiment can be used as a material for configuring a tread part (and a cap part including a tread part) to be brought into contact with a road surface. A pneumatic tire in which a tread part is configured using the crosslinked rubber composition is excellent in wet-gripping property, and thus excellent in driving stability and braking property. In addition, since the pneumatic tire is excellent in rolling resistance characteristic and is low in rolling resistance, the reduction in fuel consumption can be realized. Furthermore, since the pneumatic tire is excellent in abrasion resistance, it can withstand long-term usage.

The crosslinked rubber composition according to the present embodiment can be used as a material for configuring an inner liner part. A pneumatic tire in which an inner liner part is configured using the crosslinked rubber composition can sufficiently reduce air leakage, and thus can sufficiently prevent the deterioration of rolling resistance characteristic due to air leakage.

The pneumatic tire according to the present embodiment has, for example, a structure of two or more layers including a cap part in which a tread part is brought into contact with a road surface, and a base part located inside thereof, and a part or all of the cap part is configured by the crosslinked rubber composition. Such a pneumatic tire can be appropriately produced according to a method for producing a pneumatic tire using a conventionally known rubber composition.

In the pneumatic tire according to the present embodiment, for example, a part or all of the inner liner part is configured by the crosslinked rubber composition. Such a pneumatic tire can be appropriately produced according to a method for producing a pneumatic tire using a conventionally known rubber composition.

Hereinabove, preferable embodiments of the present invention are described, but the present invention is not limited to the embodiments. For example, the present invention may be a method for compounding the isobutylene polymer to a rubber material for use in the pneumatic tire (Examples of rubber component include the rubber) for crosslinking to thereby enhance wet-gripping property (or rolling resistance characteristic), namely, a method for enhancing wet-gripping property (or rolling resistance characteristic) by using a crosslinked rubber material having a structure, in which the rubber material and the isobutylene polymer are crosslinked, to configure a tread part. In this case, while rolling resistance characteristic and/or abrasion resistance are reduced in association with the enhancement in wet-gripping property in a conventional method for improving a rubber material, wet-gripping property can be enhanced with rolling resistance characteristic and abrasion resistance inherent in the rubber material being maintained, according to the method of the present invention.

The present invention may be a method for compounding the isobutylene polymer to a rubber material for use in the pneumatic tire (Examples of rubber component include the rubber) for crosslinking to thereby enhance water vapor barrier property and oxygen barrier property. That is, it may be a method for improving the air leakage of a tire by using a crosslinked rubber material having a structure, in which the rubber material and the isobutylene polymer are crosslinked, to configure an inner liner part.

### Examples

Hereinafter, the present invention will be more specifically described with reference to Examples, but the present invention is not limited to Examples.

### (Example 1)

Mixed solution 1 in which tricyclodecene vinyl ether (hereinafter, sometimes represented as "VE".), isobutylene (hereinafter, sometimes represented as "IB".), isobutane and dehydrated toluene were mixed, mixed solution 2 in which dehydrated toluene, ethanol as a protic complexing agent and ethyl acetate as an aprotic complexing agent were mixed, and boron trifluoride gas were continuously supplied to a 1000 ml-volume autoclave equipped with a stirring blade so that the amount of each of the components supplied was as listed in Table 1, and allowed to be reacted at a reaction temperature listed in Table 1, and the reaction mixture was continuously discharged.

The reaction was performed for 7 hours, and the reaction mixture obtained for 2 hours was collected to terminate a polymerization reaction by water. After the completion of polymerization, calcium hydroxide was added to the reaction mixture collected, and a catalyst residue was decalcified. Then, the reaction mixture was filtrated, the resulting filtrate was washed with a large amount of water three times and then dried with anhydrous magnesium sulfate, and the solvent was distilled under reduced pressure by an evaporator to obtain isobutylene polymer A-1.

Here, as the tricyclodecene vinyl ether, a mixture of a compound represented by the following formula (7-a) and a compound represented by the following formula (7-b) was synthesized with reference to Production Example 1 in International Publication WO 2010/137655, and used.

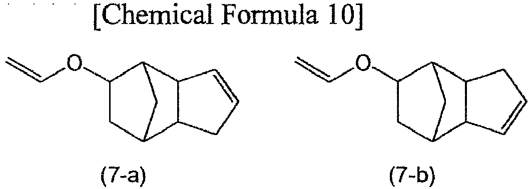

### (Examples 2 to 6)

Each of isobutylene polymers A-2 to A-6 was obtained in the same manner as in Example 1 except that the amount of each of the components supplied was as listed in Table 1.

### (Comparative Examples 1 to 3 and 5)

Each of isobutylene polymers B-1 to B-3 and B-5 was obtained in the same manner as in Example 1 except that the amount of each of the components supplied was as listed in Table 2.

### (Comparative Example 4)

Mixed solution 1 in which tricyclodecene vinyl ether (VE), isobutylene (IB), isobutane and dehydrated toluene were mixed, and a boron trifluoride methanol complex were continuously supplied to a 1000 ml-volume autoclave equipped with a stirring blade so that the amount of each of the components supplied was as listed in Table 2, and allowed to be reacted at a reaction temperature of -20°C, and the reaction mixture was continuously discharged.

The reaction was performed for 7 hours, and the reaction mixture obtained for 2 hours was collected to terminate a polymerization reaction by water. After the completion of polymerization, calcium hydroxide was added to the reaction mixture collected, and a catalyst residue was decalcified. Then, the reaction mixture was filtrated, the resulting filtrate was washed with a large amount of water three times and then dried with anhydrous magnesium sulfate, and the solvent was distilled under reduced pressure by an evaporator to obtain isobutylene copolymer B-4.

### (Comparative Example 6)

When the reaction was performed in the same manner as in Example 1 except that the amount of each of the components supplied was as listed in Table 2, a polymerization reaction did not progress, and an isobutylene polymer was not obtained.

### (Measurement of Weight Average Molecular Weight Mw and Content Proportion of Low Molecular Weight Substance)

With respect to each of the isobutylene polymers obtained in Examples 1 to 6 and Comparative Examples 1 to 5, GPC measurement was performed to determine the weight average molecular weight Mw and the content proportion of the low molecular weight substance. The weight average molecular weight Mw and the content proportion of the low molecular weight substance determined are shown in Table 1 or 2.

Specifically, each of the isobutylene polymers was dissolved in special grade tetrahydrofuran (produced by Kishida Chemical Co., Ltd.), and GPC measurement was performed in an HLC-8220GPC apparatus manufactured by Tosoh Corporation by connecting TSK-GEL Super HZ2000, HZ3000, HZ4000, and HZM-N (manufactured by Tosoh Corporation) in series and using tetrahydrofuran as an eluate. Polystyrene standard was used for calibration of the molecular weight to determine the weight average molecular weight in terms of polystyrene. With respect to the content proportion of the low molecular weight substance, the concentration fractions of the respective molecular weight components were accumulated based on the molecular weight distribution curve obtained from GPC measurement to obtain a "molecular weight-weight fraction" plot, determining a proportion of a molecular weight of 1000 or less (% by mass).

With respect to the isobutylene polymers obtained Comparative Examples 3, 4, and 5, two peaks as a polymer peak at an early detection time (high molecular weight polymer) and a polymer peak at a late detection time (low molecular weight polymer) were detected in GPC measurement. Based on the detection time at the point (valley peak) closest to the baseline between the two peaks, the respective weight average molecular weights of the high molecular weight polymer and the low molecular weight polymer were determined.

**[Table 1]**

| | Example | | | | | |
|---|---|---|---|---|---|---|
| | 1 | 2 | 3 | 4 | 5 | 6 |
| BF₃ (mol/h) | 20 | 17 | 20 | 31 | 60 | 60 |
| Protic complexing agent (mol/h) | 0.1 | 1.6 | 0.1 | 0.3 | 0.15 | 0.3 |
| Aprotic complexing agent(mol/h) | 2.0 | 0 | 1.0 | 1.0 | 2.0 | 15 |
| IB(mol/h) | 216 | 662 | 867 | 711 | 216 | 216 |
| VE(mol/h) | 4.4 | 13.5 | 17.7 | 14.5 | 4.4 | 4.4 |
| A/(B1+B2+D) | 3.1 | 1.1 | 1.1 | 2.0 | 9.2 | 3.0 |
| A/B1 | 200 | 11 | 200 | 103 | 400 | 200 |
| B2/B1 | 20 | 0 | 10 | 3.3 | 13 | 50 |
| Reaction temperature (°C) | -25 | -20 | -25 | -30 | -25 | -25 |
| Weight average molecular weight Mw | 36000 | 18000 | 29000 | 35000 | 25000 | 22000 |
| Low molecular weight substance (% by mass) | 3.3 | 3.5 | 4.7 | 2.7 | 4.1 | 4.5 |

**[Table 2]**

| | Comparative Example | | | | | |
|---|---|---|---|---|---|---|
| | 1 | 2 | 3 | 4 | 5 | 6 |
| BF₃ (mol/h) | 60 | 70 | 8.9 | 0.04 | 1 | 30 |
| Protic complexing agent (mol/h) | 0.3 | 0.2 | 0.4 | 0.04 | 0.25 | 0.05 |
| Aprotic complexing agent(mol/h) | 20 | 2 | 0.4 | 0 | 2 | 2 |
| IB (mol/h) | 216 | 216 | 662 | 5 | 5 | 216 |
| VE (mol/h) | 4.4 | 4.4 | 13.5 | 0.11 | 0.11 | 4.4 |
| A/(B1+B2+D) | 2.4 | 10.6 | 0.6 | 0.3 | 0.4 | 4.7 |
| A/B1 | 200 | 350 | 22 | 1 | 4 | 600 |
| B2/B1 | 67 | 10 | 1 | 0 | 8 | 40 |
| Reaction temperature (°C) | -25 | -25 | -20 | -20 | -25 | -25 |
| Weight average molecular weight Mw | 21000 | 22000 | 24000 (600) | 12000 (500) | 15000 (400) | - |
| Low molecular weight substance (% by mass) | 15 | 20 | 63 | 33 | 46 | - |

### (Example 7)

Isobutylene polymer A-1 obtained in Example 1, a filler, a silane coupling agent, a plasticizer, a vulcanizer, a vulcanization accelerator, a vulcanization aid and an antioxidant were compounded to a styrene-butadiene copolymer rubber (JSR SL552 produced by JSR Corporation. Hereinafter, sometimes represented as "SBR".) in the respective compounding ratios (parts by mass) shown in Table 3, and kneaded. Here, silica AQ (produced by Tosoh Silica Corporation) as the filler, Si 69 (produced by Degussa AG, (EtO)₃S₁-C₃H₆-S₄-C₃H₆-Si(OEt)₃) as the silane coupling agent, a process oil (NS-100, produced by Idemitsu Kosan Co., Ltd.) as the plasticizer, sulfur (produced by Kawagoe Chemical Corporation) as the vulcanizer, zinc oxide #3 (produced by Hakusuitech Co., Ltd.) and stearic acid (produced by Nippon Fine Chemical Co., Ltd.) as the vulcanization aid, a sulfenamide accelerator Nocceler CZ (N-cyclohexyl-2-benzothiazyl sulfenamide produced by Ouchi Shinko Chemical Industrial Co., Ltd.) and a guanidine accelerator Nocceler D (1,3-diphenylguanidine produced by Ouchi Shinko Chemical Industrial Co., Ltd.) as the vulcanization accelerator, and an antioxidant 224 (produced by Ouchi Shinko Chemical Industrial Co., Ltd.) as the antioxidant were used.

This kneading was performed using a roll machine (6 inch φ x 16 inch) under conditions of a rotation number of 30 rpm and a rotation ratio of back and front rolls of 1 : 1.22. The rubber composition obtained in this kneading was subjected to compression molding under vulcanization conditions of 160°C x 20 minutes, to prepare a test sheet made of a crosslinked rubber composition. The moldability at this time was extremely favorable. Then, this test sheet was used to evaluate dynamic viscoelastic property and abrasion resistance by a method described later. These results are shown in Table 4.

### (Examples 8 to 12)

Each test sheet made of a crosslinked rubber composition was prepared in the same manner as in Example 7 except that each of isobutylene polymers A-2 to A-6 obtained in Examples 2 to 6 was used instead of isobutylene polymer A-1. The moldability at this time was extremely favorable in any Example. Then, this test sheet was used to evaluate dynamic viscoelastic property and abrasion resistance by a method described later. The results are shown in Table 4.

### (Comparative Examples 7 to 11)

Each test sheet made of a crosslinked rubber composition was prepared in the same manner as in Example 7 except that each of isobutylene polymers B-1 to B-5 obtained in Comparative Examples 1 to 5 was used instead of isobutylene polymer A-1. Then, this test sheet was used to evaluate dynamic viscoelastic property and abrasion resistance by a method described later. The results are shown in Table 5.

**[Table 3]**

| | Compounding ratio (parts by mass) |
|---|---|
| SBR | 100 |
| Isobutylene polymer | 10 |
| Silica AQ | 40 |
| Si69 | 4 |
| Antioxidant 224 | 2 |
| Stearic acid | 1 |
| Zinc oxide #3 | 3 |
| Process oil | 10 |
| Sulfur | 1.7 |
| Nocceler CZ | 2.5 |
| Nocceler D | 0.5 |

### (Measurement of Dynamic Viscoelastic Property)

Measurement of dynamic viscoelastic property was performed according to JIS K-7244-4 (Plastic-Test method of dynamic mechanical property-Part 4: Tensile vibration-Non-resonance method). Specifically, one test piece of 1 mm in thickness x 5 mm in width x 40 mm in length cut out from each of the test sheets obtained in Examples and Comparative Examples was used to be subjected to measurement in a tensile mode under conditions of a frequency of 10 Hz and a strain of 0.1% while the measurement temperature being raised in the range of -50 to 100°C at 2°C/min. The apparatus used is a measurement apparatus for dynamic viscoelastic property, RSA-3 (manufactured by TA INSTRUMENTS).

Here, the reason why the frequency was 10 Hz is because wet-gripping property correlates with the tanδ value at 10 Hz and 0°C when the time-temperature reduction law for viscoelasticity is utilized, and it is known that as the numeral value is larger, wet-gripping property is more favorable. Rolling resistance similarly correlates with the tanδ value at 10 Hz-60°C, and it is known that as the numeral value is smaller, rolling resistance is more favorable. In Tables 4 and 5, the tanδ value at 10 Hz-0°C and the tanδ value at 10 Hz-60°C were listed as "gripping property" and "rolling resistance", respectively.

### (Abrasion Resistance Test)

An abrasion resistance test was performed according to JIS K-6264-2 (Vulcanized and thermoplastic rubbers-Determination of abrasion resistance-Part 2, test method). Specifically, the abrasion level (abrasion volume)(mm³) when the test piece was rotated 1000 times at a rotation speed of 75 rpm under conditions of a load of 27 N and an inclination angle of 15 degrees in an akron abrasion tester was measured to evaluate abrasion resistance. The test was performed three times, and the average thereof was defined as a measurement value.

**[Table 4]**

| | Example 7 | Example 8 | Example 9 | Example 10 | Example 11 | Example 12 |
|---|---|---|---|---|---|---|
| Gripping property | 0.176 | 0.156 | 0.163 | 0.172 | 0.164 | 0.161 |
| Rolling resistance | 0.0619 | 0.0613 | 0.0587 | 0.0606 | 0.0581 | 0.0613 |
| Abrasion volume | 275 | 251 | 222 | 240 | 257 | 251 |

**[Table 5]**

| | Comparative Example 7 | Comparative Example 8 | Comparative Example 9 | Comparative Example 10 | Comparative Example 11 |
|---|---|---|---|---|---|
| Gripping property | 0.145 | 0.137 | 0.143 | 0.140 | 0.132 |
| Rolling resistance | 0.0632 | 0.0657 | 0.0644 | 0.0657 | 0.0651 |
| Abrasion volume | 296 | 299 | 308 | 316 | 325 |

When the measurement value in Comparative Example 10 was defined as 100 for comparison between Examples and Comparative Examples, the measurement values in Examples and Comparative Examples are shown in Table 6 and Table 7.

**[Table 6]**

| | Example 7 | Example 8 | Example 9 | Example 10 | Example 11 | Example 12 |
|---|---|---|---|---|---|---|
| Gripping property | 126 | 112 | 117 | 123 | 118 | 116 |
| Rolling resistance | 94 | 93 | 89 | 92 | 88 | 93 |
| Abrasion volume | 87 | 79 | 70 | 76 | 81 | 79 |

**[Table 7]**

| | Comparative Example 7 | Comparative Example 8 | Comparative Example 9 | Comparative Example 10 | Comparative Example 11 |
|---|---|---|---|---|---|
| Gripping property | 104 | 98 | 102 | 100 | 95 |
| Rolling resistance | 96 | 100 | 98 | 100 | 99 |
| Abrasion volume | 93 | 94 | 97 | 100 | 103 |

As shown in Tables 4 to 7, in Examples 7 to 12 each using the isobutylene polymer which is produced by a specified production method and in which the content of the low molecular weight substance is 5% by mass or less, excellent dynamic viscoelastic characteristic and abrasion resistance are achieved.

## Claims

1. A rubber composition containing a rubber component having an olefinic double bond, and an isobutylene polymer having a structural unit represented by the following formula (1) and a structural unit represented by the following formula (2), wherein
a content of a low molecular weight substance whose molecular weight is 1000 or less in the isobutylene polymer is 5% by mass or less based on the total amount of the isobutylene polymer: 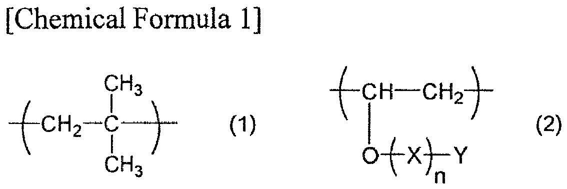 wherein, X represents a divalent group, Y represents a substituted or unsubstituted alicyclic group having an unsaturated bond, and n represents 0 or 1.

2. The rubber composition according to claim 1, wherein the isobutylene polymer has a structural unit represented by the following formula (3) and/or a structural unit represented by the following formula (4) as the structural unit represented by the formula (2): 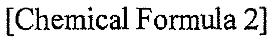 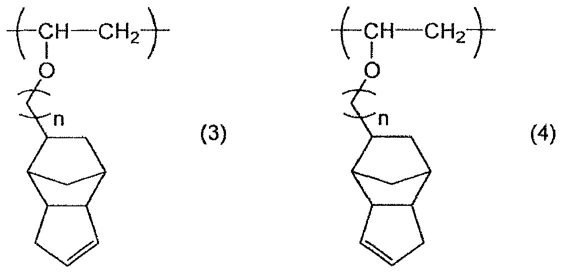 wherein, n represents 0 or 1.

3. The rubber composition according to claim 1 or 2, wherein the isobutylene polymer is a polymer obtained by copolymerizing isobutylene and a vinyl ether compound represented by the following formula (7):
CH₂=CH-O-(X)ₙ-Y (7)
wherein, X represents a divalent group, Y represents a substituted or unsubstituted alicyclic group having an unsaturated bond, and n represents 0 or 1,
in a reaction liquid to which a Lewis acid catalyst, a protic complexing agent and an aprotic complexing agent are added, and
when a total molar number of the Lewis acid catalyst, a total molar number of the protic complexing agent and a total molar number of the aprotic complexing agent, added to the reaction liquid, are defined as A, B₁ and B₂, respectively, and a total molar number of the vinyl ether compound subjected to the copolymerization is defined as D, A/(B₁+B₂+D) is 1 to 10, A/B₁ is 5 to 400 and B₂/B₁ is 0 to 50.

4. The rubber composition according to any one of claims 1 to 3, wherein the rubber component contains at least one selected from the group consisting of a natural rubber, a butadiene rubber, a nitrile rubber, a silicone rubber, an isoprene rubber, a styrene-butadiene rubber, an isoprene-butadiene rubber, a styrene-isoprene-butadiene rubber, an ethylene-propylene-diene rubber, a halogenated butyl rubber, a halogenated isoprene rubber, a halogenated isobutylene copolymer, a chloroprene rubber, a butyl rubber and a halogenated isobutylene-p-methylstyrene rubber.

5. The rubber composition according to any one of claims 1 to 4, wherein a content of the isobutylene polymer is 0.5 to 70 parts by mass per 100 parts by mass of the rubber component.

6. The rubber composition according to any one of claims 1 to 5, wherein the rubber component is substantially a styrene-butadiene rubber.

7. The rubber composition according to any one of claims 1 to 6, further containing a crosslinking agent.

8. A crosslinked rubber composition obtained from the rubber composition according to any one of claims 1 to 7, having a structure in which the rubber component and the isobutylene polymer are crosslinked.

9. A pneumatic tire containing the crosslinked rubber composition according to claim 8 in a tread part.

10. A method for producing an isobutylene polymer having a structural unit represented by the following formula (1) and a structural unit represented by the following formula (2), comprising a step of copolymerizing isobutylene and a vinyl ether compound represented by the following formula (7):
CH₂=CH-O-(X)ₙ-Y (7)
wherein X represents a divalent group, Y represents a substituted or unsubstituted alicyclic group having an unsaturated bond, and n represents 0 or 1,
in a reaction liquid to which a Lewis acid catalyst, a protic complexing agent and an aprotic complexing agent are added,
wherein in the step, when a total molar number of the Lewis acid catalyst, a total molar number of the protic complexing agent and a total molar number of the aprotic complexing agent, added to the reaction liquid, are defined as A, B₁ and B₂, respectively, and a total molar number of the vinyl ether compound subjected to the copolymerization is defined as D, A/(B₁+B₂+D) is 1 to 10, A/B₁ is 5 to 400 and B₂/B₁ is 0 to 50: 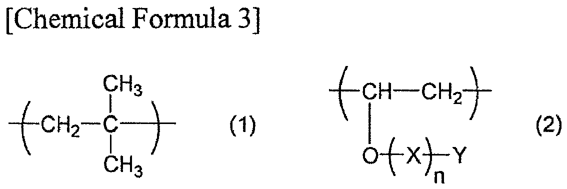 wherein, X represents a divalent group, Y represents a substituted or unsubstituted alicyclic group having an unsaturated bond, and n represents 0 or 1.

11. The method for producing an isobutylene polymer according to claim 10, wherein the Lewis acid catalyst is selected from the group consisting of a boron halide compound, a titanium halide compound, a tin halide compound, an aluminum halide compound, an antimony halide compound, a tungsten halide compound, a molybdenum halide compound, a tantalum halide compound and a metal alkoxide.
